# EUROPÄISCHE PATENTSCHRIFT

(11) **EP 2 130 026 B1**
(45) Veröffentlichungstag und Bekanntmachung des Hinweises auf die Patenterteilung: **24.10.2012**
(21) Anmeldenummer: 08734816.5
(22) Anmeldetag: 27.03.2008
(51) Int. Cl.: G01N 21/17, G01N 21/03

(54) **PHOTOAKUSTISCHE MULTIPASS-ZELLE MIT KONZENTRIERENDEN REFLEXIONSMITTELN**
PHOTOACOUSTIC MULTIPASS CELL WITH CONCENTRATING REFLECTION MEANS
CELLULE PHOTOACOUSTIQUE MULTIPASSAGES COMPORTANT DES ÉLÉMENTS DE RÉFLEXION CONCENTRATEURS

(30) Priorität: 27.03.2007 DE 102007014518
(43) Veröffentlichungstag der Anmeldung: 09.12.2009
(73) Patentinhaber: Fraunhofer-Gesellschaft zur Förderung der angewandten Forschung e.V., 80686 München (DE)
(72) Erfinder: MIKLOS, Andras, 70499 Stuttgart (DE); ANGSTER, Judit, 70499 Stuttgart (DE)
(86) Internationale Anmeldenummer: PCT/EP2008/002438
(87) Internationale Veröffentlichungsnummer: WO 2008/116658

(56) Entgegenhaltungen:
- WO-A-2004/008112
- MIKLÓS ANDRÁS ET AL: "Application of acoustic resonators in photoacoustic trace gas analysis and metrology" REVIEW OF SCIENTIFIC INSTRUMENTS, AIP, MELVILLE, NY, US, Bd. 72, Nr. 4, 1. April 2001 (2001-04-01), Seiten 1937-1955, XP012039066 ISSN: 0034-6748
- MIKLOS A ET AL: "WINDOWLESS RESONANT ACOUSTIC CHAMBER FOR LASER-PHOTOACOUSTIC APPLICATIONS" APPLIED PHYSICS B. PHOTOPHYSICS AND CHEMISTRY, SPRINGER VERLAG. HEIDELBERG, DE, Bd. B48, Nr. 3, 1. März 1989 (1989-03-01), Seiten 213-218, XP000035737
- LARS-GÖRAN ROSENGREN: "Optimal optoacoustic detector design" APPLIED OPTICS, OSA, OPTICAL SOCIETY OF AMERICA, WASHINGTON, DC, Bd. 14, Nr. 8, 1. August 1975 (1975-08-01), Seiten 1960-1976, XP002456456 ISSN: 0003-6935
- HAO LU-YUAN ET AL: "Cylindrical mirror multipass Lissajous system for laser photoacoustic spectroscopy", REVIEW OF SCIENTIFIC INSTRUMENTS, AIP, MELVILLE, NY, US, vol. 73, no. 5, 1 May 2002 (2002-05-01), pages 2079-2085, XP012040016, ISSN: 0034-6748, DOI: 10.1063/1.1464653

## Beschreibung

### Technisches Gebiet

Die Erfindung betrifft eine photoakustische Multipass-Zelle, in der das Anregungslicht mit einer divergenten Lichtquelle bereitgestellt wird und mehrfach reflektiert wird. Die divergente Lichtquelle wird in der Regel durch das geeignet geformte Ende einer optischen Faser gebildet.

### Stand der Technik

Photoakustische Messverfahren, also Messverfahren bei dem mit einer Lichtquelle die zu untersuchende Substanz, vorzugsweise ein Gas, bestrahlt wird und durch Absorption erwärmt wird, eignen sich gut für genaue Messungen der Konzentration absorbierender Gase oder absorbierender Substanzen in Gasen. Durch die Erwärmung erfolgt eine Ausdehnung des Gases. Erfolgt die Erwärmung und damit die Ausdehnung periodisch, entsteht eine Schallwelle, welche von einem Schalldruckaufnehmer gemessen werden kann. Im Vergleich zur klassischen Absorptionsspektroskopie, bei der das durch die Probe gelangende Licht gemessen wird und aus der Differenz des eingestrahlten Lichts und des durch die Probe gelangenden Lichts auf die Absorption geschlossen wird, hat die photoakustische Spektroskopie mehrere Vorteile. Das photoakustische Signal ist in einem Konzentrationsbereich von etwa 5-6 Größenordnungen linear. Empfindliche photoakustische Zellen können auch dadurch realisiert werden, dass aus dem Stand der
Technik bekannte optische Zellen eingesetzt werden. Dabei wird in einer Lichtquelle Licht erzeugt und in die optische Zelle eingebracht. In der Regel befindet sich die Lichtquelle außerhalb und das Licht wird durch eine Lichtleitfaser in die optische Zelle geleitet. Durch geeignete optische Elemente kann das Licht als Parallelstrahl oder fokussierter Strahl in die optische Zelle geleitet werden. Als empfindliche optische Absorptionszellen können Zellen verwendet werden, die aus der Absorptionsspektroskopie bekannt sind. In der optischen Zelle wird das Licht somit in der Regel mehrfach reflektiert. Der mehrfache Durchgang des Lichts erlaubt, dass das Licht von den absorbierenden Stoffen in der Zelle gut absorbiert wird. Am Ende tritt das Licht aus der Zelle aus und gelangt an einen Detektor, in dem die Lichtintensität gemessen wird. Durch Vergleich der einfallenden Lichtintensität und der Intensität nach mehrfachem Durchgang durch die Zelle kann bei bekanntem Lichtweg über das Beer-Lambertsche Gesetz auf die Absorption geschlossen werden. Modifiziert man eine solche optische Multipass-Zelle derart, dass auf den optischen Detektor verzichtet wird und dafür Schalldruckaufnehmer angeordnet werden, so erreicht man mit einfachen Mitteln eine photoakustische Multipass-Zelle. Nachteilig an derartigen photoakustischen Multipass-Zellen, ist ihre relativ kleine Empfindlichkeit wegen eines hohen Volumens; in der Regel beträgt das Volumen mindestens einen halben Liter. Hohe Empfindlichkeit ist erreichbar mit einer photoakustischen Multipass-Zelle mit eingebautem Hohlspiegel. Experimente und Testmessungen einer Multipass-Zelle haben aber gezeigt, dass diese Konstruktion extrem hohe Anforderungen an den genauen Eintrittswinkel der Laserstrahlung und die Justierung der Hohlspiegel stellt. Dies ist in A. Miklos, J. Ng, P. Hess, A. H. Kung "Application of a wavelength-amplitude double-modulation method in photoacoustic detection using a pulsed optical parametric oscillator" Journal de Physique IV, 125, 579-582, (2005) und A. Miklos, S-C. Pei and A.H. Kung "Multipass acoustically open photoacoustic detector for trace gas measurements", Applied Optics 45, 2529-2534, (2006) beschrieben.

Aus der WO 2004/008112 geht eine Anordnung hervor, in der Licht durch ein Probevolumen geleitet wird und dort je nach Konzentration eines zu untersuchenden Gases absorbiert wird. Die Menge des transmittierten Lichts wird bestimmt, indem das transmittierte Licht nach Durchgang durch das Probevolumen in einer photoakustischen Messzelle erfasst wird. Dabei ist ein Mehrfachdurchgang des Lichts sowohl im Probevolumen als auch in der photoakustischen Messzelle vorgesehen.

### Beschreibung

Der vorliegenden Erfindung liegt daher die Aufgabe zugrunde, die Nachteile des Standes der Technik zu überwinden und photoakustische Multipass-Zellen bereitzustellen, die sehr empfindlich sind und bei denen keine besonders genaue Justierung des anregenden Lichtstrahls erforderlich ist.

Diese Aufgabe wird durch den unabhängigen Anspruch gelöst. Unteransprüche geben vorteilhafte Weiterbildungen an.

Vorgeschlagen werden photoakustische Multipass-Zellen, mit einer Lichtquelle und Mitteln zur Bereitstellung hoher Leistungsdichte von Licht in einem akustischen Resonator. Die Mittel zur Bereitstellung von hoher Leistungsdichte reflektieren und konzentrieren das Licht, sind mithin konzentrierend ausgebildet. Die Lichtquelle ist dabei zwischen den konzentrierend ausgebildeten Mitteln angeordnet

Es wurde erkannt, dass es in einer photoakustischen Multipass-Zelle völlig ausreichend ist, sicher zu stellen, dass das eingeleitete Licht die photoakustische Multipass-Zelle im Wesentlichen nicht mehr verlässt. Die genaue Kenntnis des Lichtwegs ist in der Photoakustik unbedeutend. Insbesondere ist es nicht erforderlich, das Licht aus der Multipass-Zelle heraus in einen optischen Detektor zu leiten. Die gewünschte Kenntnis des genauen Lichtwegs, die Vermeidung von Interferenzen und das Erfordernis das Licht in einen optischen Detektor zu leiten, haben bei optischen Multipass-Zellen dazu geführt, dass die Reflektoren nicht konzentrierend ausgebildet sein dürfen und somit sehr genau justiert sein müssen. Schon eine geringe Dejustierung eines Spiegels oder Abweichung des Eintrittwinkels des Lichts in die Multipass-Zelle führt dazu, dass das Licht nicht dem gewünschten Weg in der Multipass-Zelle folgt, sondern aus dem Messbereich austritt.

Da das photoakustische Signal proportional mit der in der Multipass-Zelle absorbierten Lichtleistung, aber unabhängig vom Absorptionsweg ist, kann eine photoakustische Mutipass-Zelle auf einfache Weise so gebaut werden, dass das eingeleitete Licht in der Multipass-Zelle verbleibt und im akustischen Resonator konzentriert ist. Die mehrfache Reflexion eines divergenten Lichtstrahls in der Multipass-Zelle führt zu einer wesentlichen Erhöhung der Lichtleistung im akustischen Resonator.

Bei der in A. Miklos, J. Ng, P. Hess, A. H. Kung "Application of a wavelength-amplitude double-modulation method in photoacoustic detection using a pulsed optical parametric oscillator" Journal de Physique IV, 125, 579-582, (2005) gezeigten Anordnung ist zwar eine photoakustische Multipass-Zelle mit konzentrierend ausgebildeten Mitteln zur Reflexion in einem akustischen Resonator offenbart. Damit sind die Anforderungen an die genaue Justierung der Lichtquelle gegenüber den bekannten optischen Multipass-Zellen bereits reduziert. Allerdings verbleiben noch die Anforderungen das Licht von einer externen Lichtquelle durch ein Fenster in die Multipass-Zelle einzukoppeln. Damit sind nach wie vor Anforderungen an die Justierung gegeben. Befindet sich die Lichtquelle jedoch zwischen den konzentrierend ausgebildeten Mitteln, genügt es, lediglich dafür zu sorgen, dass das aus der Lichtquelle austretende Licht auf die konzentrierenden Mittel gelangt und dann mehrfach in der Multipass-Zelle reflektiert wird. Damit darf das Licht divergent aus der Lichtquelle austreten.

Durch die Anordnung der Lichtquelle zwischen den konzentrierend angeordneten Mitteln zur Reflektion von Licht wird auch vermieden, das Licht durch Fenster in den akustischen Resonator zu leiten. Auch wenn hierbei Fenster mit sehr hoher Transmission zum Einsatz kommen, so bleibt doch eine gewisse Absorption, die zu einem unerwünschten photoakustischem Hintergrundsignal führt, welches die Messung systematisch verfälscht. Bis auf die tatsächlich lichtemittierenden Flächen kann die Lichtquelle mit hoch reflektiven Materialien beschichtet werden oder aus diesen bereits aufgebaut sein, so dass das unerwünschte photoakustiche Signal sehr gering ausfallen kann.

Im Fall einer Anregung mit einem Laserpuls kann eine effektive Verlängerung des Anregungspulses erfolgen. Hinsichtlich akustischer Zeiten ist diese Pulsverlängerung aber vernachlässigbar gering. Wenn die Reflexionsmittel einen Abstand von 10 cm aufweisen, braucht das Licht hierfür etwa 0,33 ns. Die Anzahl der Reflexionen hängt von der Reflektivität der Reflexionsmittel ab. Beträgt die Reflektivität r beispielsweise r = 0,95 ist der Puls nach etwa 100 Reflexionen ausgelöscht. Die Pulsdauer verlängert sich somit um 33 ns. Bei einer Reflektivität von r = 0,98, wie sie von einem Gold beschichteten Spiegel erreicht werden kann, verlängert sich die Pulsdauer um etwa 80 ns. Es erfolgt eine Verstärkung des Anregungspulses um den Faktor 1/(1-r).

Aufgrund der niedrigen Anforderungen an die Lichtquelle kann die Lichtquelle punktförmig ausgebildet sein. Damit kann die räumliche Ausdehnung sehr klein sein, wodurch unerwünschte Absorptionen vermieden werden, welche ein Hintergrundsignal hervorrufen würden.

Eine geeignete Realisierung der Lichtquelle ist eine in die photoakustische Multipass-Zelle geführte Faser, an deren Ende das Licht aus der Faser in die photoakustische Multipass-Zelle gelangen kann. Insbesondere bei der Verwendung von Fasern ist der oben geschilderte Aufbau von Vorteil. Licht tritt aus Fasern stets divergent aus. Durch die hier vorgestellte Vorrichtung ist diese Divergenz in der Regel hinzunehmen. Es ist also nicht wie im Stand der Technik erforderlich, dass das in die Multipass-Zelle eingeleitete Licht ein Parallelstrahl sein muss. So können die Reflexionsmittel problemlos so ausgestaltet werden, dass ein Austrittswinkel bis etwa 26° aus der Faser hinzunehmen ist.

Es ist auch möglich als Lichtquelle eine in der photoakustischen Multipass-Zelle angeordnete Laserdiode einzusetzen. Bevorzugt ist diese Laserdiode mit einer Linse zu versehen. Je nach Divergenz der Laserdiode kann auf die Linse angesichts des vorteilhaften optischen Aufbaus unter Umständen verzichtet werden. In jedem Fall ergibt sich eine Erleichterung gegenüber dem Stand der Technik, wenn die Justierung der Lichtquelle weniger bedeutsam ist.

Ein geeignetes Mittel zur Reflexion des Lichts sind zwei sphärische Spiegel mit gemeinsamer optischer Achse. So wird auf einfache Weise erreicht, dass das Licht im Messbereich zwischen den Spiegeln verbleibt.

Bevorzugt haben die beiden Spiegel den gleichen Radius. Dies ist optisch günstig. Es ist damit auch leicht möglich, die Spiegel so anzuordnen, dass sie einen gemeinsamen Mittelpunkt haben. Ferner ist die Verwendung gleicher Bauteile generell vorteilhaft, da somit größere Stückzahlen und folglich niedrigere Preise möglich sind.

Bevorzugt liegt die Lichtquelle näher am gemeinsamen Mittelpunkt der Spiegel als an einem der Spiegel. Auf diese Weise kommt es besonders wenig auf eine genaue Justierung der Lichtquelle an. Jeder Lichtstrahl, der von der Lichtquelle auf einen der Spiegel trifft, verbleibt im Bereich zwischen den Spiegeln.

Eine bevorzugte Ausführungsform sieht vor, dass der akustische Resonator oder die photoakustische Zelle als Zylinder ausgebildet ist. Bei einem Zylinder handelt es sich um einen Körper, der einfach bereitgestellt werden kann, gute akustische Eigenschaften aufweist und gut vom zu untersuchenden Gas durchströmt werden kann. Je nach Lenkung des Anregungslichts ist es damit auch möglich die erste longitudinale Resonanz, die erste oder zweite azimutale Resonanz oder die erste radiale Resonanz des zylinderförmigen akustischen Resonators anzuregen.

Besonders vorteilhaft ist ein akustischer Resonator, bei dem die Mittel zur Reflexion an den Seitenwänden des Zylinders so angebracht sind, dass die durch Absorption des Anregungslichts am besten anregbare Schallwelle die zweite azimutale Resonanz der Zylinderschwingung ist. Zur Veranschaulichung betrachte man einen Zylinder im Querschnitt. Wenn man durch geeignete Anregung erreicht, dass in gegenüberliegenden Bereichen des Kreises, der den Zylinderquerschnitt darstellt, Ausdehnungen erfolgen, während in den den gegenüberliegenden Bereichen benachbarten Bereichen, die sich selbst wieder gegenüber liegen, keine Ausdehnung erfolgt, erzielt man eine entsprechende Schallwelle. Durch die Anregung bilden sich somit Kreissegmente mit einem durch die Ausdehnung erhöhten Druck. Die benachbarten Kreissegmente, welche größer sind, weisen keinen erhöhten Druck, sondern normalen Druck auf. Durch diese Druckdifferenzen kann sich eine im Zylinder umlaufende Schallwelle ausbilden. Bei geeigneter Wahl der Anregungsfrequenz, also der Wiederholfrequenz oder Modulationsfrequenz der Lichtquelle kann die zweite azimutale Resonanz angeregt werden. Dadurch erfolgt eine hohe Verstärkung des photoakustischen Signals.

In einer bevorzugten Ausführungsform sind zwei gegenüberliegende sphärische Spiegel mit gemeinsamem Mittelpunkt vorhanden. Im Bereich des gemeinsamen Mittelpunkts der Spiegel ist eine divergente Lichtquelle so angeordnet, dass das Anregungslicht auf den ersten Spiegel geleitet werden kann, von dem es auf den gegenüberliegenden zweiten Spiegel reflektiert werden kann so dass das Licht mehrfach zwischen den gegenüberliegenden Spiegeln reflektiert werden kann. Die divergente Lichtquelle wird in der Regel durch das Ende einer Faser gebildet. Damit kann mit einer einfachen Vorrichtung in den Kreissegmenten, welche zwischen den Spiegeln liegen, eine Anregung erfolgen. Im übrigen Bereich des Zylinders erfolgt keine Erwärmung, da diese Bereiche nicht von Licht durchstrahlt werden.

Das Anregungslicht kann als Einzelpuls oder als periodische Folge von Pulsen bereitgestellt werden. Bei Anregung mit Einzelpulsen bildet sich in der photoakustischen Multipass-Zelle eine Schwingung mit der Resonanzfrequenz der Zelle aus, bevorzugt mit der stärksten Resonanzfrequenz. Wählt man bei einer periodischen Folge als Pulswiederholfrequenz die Resonanzfrequenz der angeregten oder anzuregenden Resonanz, ergibt sich ebenfalls eine resonante Schwingung. Dabei ist zu beachten, dass die Resonanzfrequenz in der Regel temperaturabhängig ist. Aus diesem Grund ist die Anregung mit Einzelpulsen häufig vorzuziehen, da eine Anpassung an sich ändernde Resonanzfrequenzen entfällt.

Mit der photoakustischen Multipass-Zelle lässt sich ein überlegenes Meßsystem gestalten.

### Ausführungsbeispiel

Ohne Einschränkung der Allgemeinheit wird die Erfindung anhand von einem Ausführungsbeispiel nachfolgend näher beschrieben.

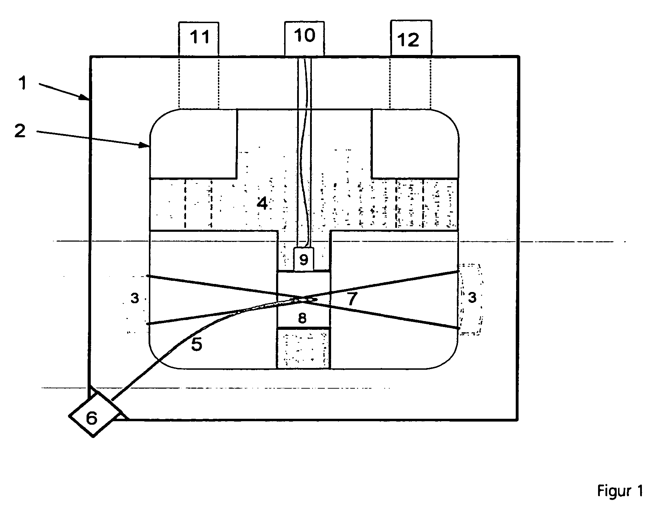

Dabei zeigt Fig. 1 einen möglichen Aufbau einer photoakustischen Multipass-Zelle.

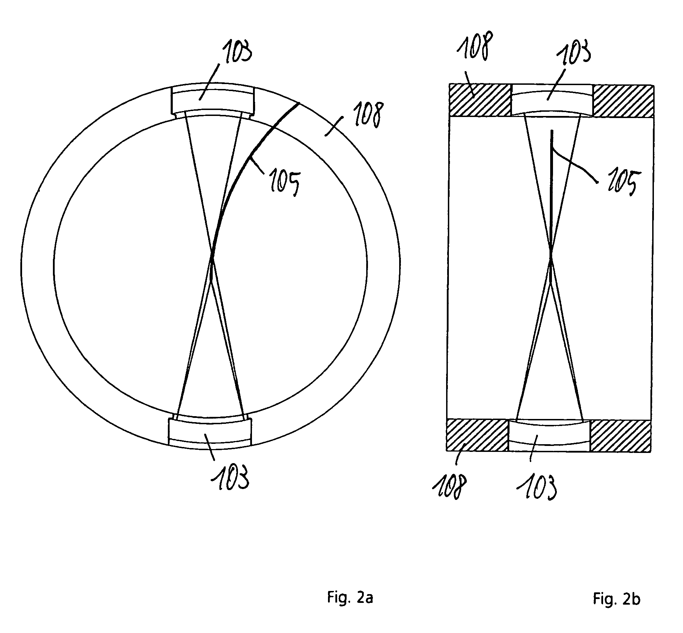

Fig. 2 zeigt eine entsprechende zylindrische photoakustische Multipass-Zelle

In einem rechtwinkligen Metallblock 1 ist ein Hohlraum 2 gefräst. Bündig mit den Wänden des Hohlraums 2 sind zwei Gold beschichtete sphärische Spiegel 3 angeordnet. Der Hohlraum 2 wiederum ist aufgeteilt in vier kleinere Hohlräume. Hierzu dient ein Körper 4 aus Kunststoff. Das Licht wird in den Hohlraum durch eine Lichtleitfaser 5 gebracht. Diese Faser ist in eine Metallkapillare gehüllt. Das freie Ende der Lichtleitfaser ist in der Nähe des gemeinsamen Mittelpunkts der beiden sphärischen Spiegel angeordnet. Das die Faser verlassende Licht trifft auf den in der Zeichnung rechts liegenden Spiegel 3. Die Lichtquelle, ein Diodenlaser oder ein Quantenkaskadenlaser, wird mit dem photoakustischen Detektor durch den Faseranschluss 6 verbunden. Der auf den Spiegel 3 treffende Lichtstrahl wird auf den gegenüber liegenden Spiegel 3 reflektiert und von dort wieder zurück reflektiert. Bei jeder Reflektion wird das Licht zur gemeinsamen optischen Achse der Spiegel hin konzentriert. Die Linien 7 zeigen die Grenze, bis zu der der vom Licht durchstrahlte Raum reicht. Der zylindrische akustische Resonator 8 ist in den Kunststoffkörper 4 eingebaut. Auf diese Weise werden die unteren Hohlräume verbunden. Das Licht kann durch den Resonator strahlen ohne die Wände des Resonators zu treffen. Damit wird verhindert, dass die Wände das Licht absorbieren und so ein unerwünschtes photoakustisches Signal generieren. Das als Schalldruckaufnehmer dienende Messmikrophon 9 ist an der metallenen Wand des akustischen Resonators 8 befestigt. Es ist mit dem Resonator durch ein kleines, in der Zeichnung nicht dargestelltes Loch verbunden. Durch eine Bohrung im Kunststoffkörper 4 ist das Mikrophon mit einem elektrischen Stecker 10 verbunden. Dieser Stecker 10 ist am Rand des Metallblocks 1 angeordnet und dient zum Anschluss einer in der Photoakustik üblichen Auswertelektronik. Durch den Gaseinlass 11 fließt das zu untersuchende Gas in den photoakustischen Detektor. Dabei strömt es durch ein Loch im Kunststoffkörper 4 in den linken unteren Hohlraum. Von dort strömt es durch den akustischen Resonator 8 in den unteren rechten Hohlraum und verlässt den photoakustischen Detektor durch ein weiteres Loch im Kunststoffkörper 4 und strömt durch den Gasauslass 12 wieder heraus. Die photoakustische Multipass-Zelle ist mit einer nicht dargestellten Metallplatte bedeckt. Die Abdichtung zwischen der Metallplatte und dem Metallblock 1 erfolgt durch einen O-Ring und die Befestigung mit Schrauben.

Figuren 2a und 2b zeigen die Anregung der zweiten azimutalen Resonanz der Zylinderschwingung in einem akustischen Resonator. Hierzu sind zwei gegenüberliegende sphärische Spiegel 103 mit gemeinsamem Mittelpunkt vorhanden. Im Bereich des gemeinsamen Mittelpunkts der Spiegel 103 endet eine Faser 105, Das Licht tritt divergent aus und trifft auf einen der Spiegel 103. Von dort wird es auf den anderen Spiegel 103 reflektiert. Durch mehrfache Reflexionen erfolgen im Bereich zwischen den Spiegeln 103 Anregungen. In den anderen Bereichen erfolgt keine Anregung. Da das Anregungslicht gepulst aus der Faser austritt und die Pulswiederholfrequenz der zweiten azimutalen Resonanz der Zylinderschwingung entspricht, wird diese vorwiegend angeregt. Damit entsteht ein hohes Signal.

Die photoakustische Zelle 108 ist damit als Zylinder ausgebildet.

### Bezugszeichenliste

- 1: Metallblock
- 2: Hohlraum im Metallblock
- 3: goldbeschichtete Spiegel
- 4: Kunststoffkörper
- 5: Lichtleitfaser
- 6: Faseranschluß
- 7: Begrenzungslinie durchstrahlter Raum
- 8: akustischer Resonator
- 9: Messmikrofon
- 10: Stecker
- 11: Gaseinlass
- 12: Gasauslass
- 103: Spiegel für zylindrischen Resonator
- 105: Faser für zylindrischen Resonator
- 108: Zylindrische photoakustische Messzelle

## Patentansprüche

1. Photoakustische Multipass-Zelle, mit einer Lichtquelle und konzentrierend ausgebildeten Mitteln (3) zur Reflexion von Licht in einem akustischen Resonator (8), wobei sich in dem akustischen Resonator (8) zu untersuchendes Gas befindet, **dadurch gekennzeichnet, dass** die Lichtquelle zwischen den konzentrierend ausgebildeten Mitteln (3) so angeordnet ist, dass von der Lichtquelle kommendes Licht auf die konzentrierenden Mittel gelangen und mehrfach in der Multipass-Zelle reflektiert werden kann.

2. Photoakustische Multipass-Zelle nach Anspruch 1, **dadurch gekennzeichnet, dass** die Lichtquelle eine in die photoakustische Multipass-Zelle geführte Faser (5) ist, an deren Ende das Licht aus der Faser (5) in die photoakustische Multipass-Zelle gelangen kann.

3. Photoakustische Multipass-Zelle nach Anspruch 1, **dadurch gekennzeichnet, dass** die Lichtquelle eine Laserdiode, insbesondere eine mit einer Linse versehene Laserdiode, ist, welche in der photoakustischen Multipass-ZeNe angeordnet ist.

4. Photoakustische Multipass-Zelle nach einem der vorhergehenden Ansprüche, **dadurch gekennzeichnet, dass** als Mittel zur Reflexion des Lichts zwei sphärische Spiegel (3) mit gemeinsamer optischer Achse vorhanden sind.

5. Photoakustische Multipass-Zelle nach Anspruch 4, **dadurch gekennzeichnet, dass** die Spiegel (3) gleiche Radien haben.

6. Photoakustische Multipass-Zelle nach einem der Ansprüche 4 oder 5, **dadurch gekennzeichnet, dass** die Lichtquelle näher am gemeinsamen Mittelpunkt der Spiegel (3) als an einem der Spiegel liegt.

7. Photoakustische Multipass-Zelle nach einem der vorhergehenden Ansprüche, **dadurch gekennzeichnet, dass** der eingebaute akustische Resonator (8) oder die photoakustische Zelle (108) als Zylinder ausgebildet ist.

8. Photoakustische Multipass-Zelle nach Anspruch 7, **dadurch gekennzeichnet, dass** die Mittel (3, 103) zur Reflexion von Licht an den Seitenwänden des Zylinders so angebracht sind, dass die durch die Absorption anregbare Schallwelle die zweite azimutale Resonanz der Zylinderschwingung ist.

9. Photoakustische Multipass-Zelle nach Anspruch 8, **dadurch gekennzeichnet, dass** zwei gegenüberliegende sphärische Spiegel (103) mit gemeinsamem Mittelpunkt vorhanden sind und eine divergente Lichtquelle im Bereich des gemeinsamen Mittelpunkts welche so angeordnet ist, dass das Anregungslicht auf einen ersten Spiegel (103) geleitet werden kann, von dem es auf den gegenüberliegenden zweiten Spiegel (103) reflektiert werden kann so dass das Licht mehrfach zwischen den gegenüberliegenden Spiegeln (103) reflektiert werden kann

10. Photoakustische Multipass-Zelle nach einem der Ansprüche 8 oder 9, **dadurch gekennzeichnet, dass** das Anregungslicht wellenlängen- oder intensitätsmoduliert bereitgestellt werden kann, wobei als Modulationsfrequenz insbesondere die Frequenz der anzuregenden oder angeregten Resonanz einstellbar ist.

11. Photoakustische Multipass-Zelle nach einem der Ansprüche 8 oder 9, **dadurch gekennzeichnet, dass** das Anregungslicht als Einzelpuls oder als periodische Folge von Pulsen bereitgestellt werden kann, wobei bei einer periodischen Folge die Pulswiederholfrequenz der Resonanzfrequenz der angeregten oder anzuregenden Resonanz entspricht.

12. Photoakustisches Meßsystem enthaltend eine photoakustische Multipass-Zelle nach einem der vorhergehenden Ansprüche.

## Claims

1. Photoacoustic multipass cell having a light source and means (3) configured in a concentrating manner for reflecting light in an acoustic resonator (8), wherein gas to be investigated is located in the acoustic resonator (8), **characterized in that** the light source is arranged between the means (3) configured in a concentrating manner such that light coming from the light source can reach the means (3) configured in a concentrating manner and being reflected multiple times in the multipass cell.

2. Photoacoustic multipass cell according to claim 1, **characterized in that** the light source is a fiber (5) guided into the photoacoustic multipass cell, at the end of which fiber (5) the light from the fiber (5) can enter the photoacoustic multipass cell.

3. Photoacoustic multipass cell according to claim 1, **characterized in that** the light source is a laser diode, especially a laser diode provided with a lens, which is arranged in the photoacoustic multipass cell.

4. Photoacoustic multipass cell according to one of the preceding claims, **characterized in that** two spherical mirrors (3) with a common optical axis are available as means for reflecting the light.

5. Photoacoustic multipass cell according to claim 4, **characterized in that** the mirrors (3) have the same radii.

6. Photoacoustic multipass cell according to one of claims 4 or 5, **characterized in that** the light source is closer to the common midpoint of the mirrors (3) then to one of the mirrors.

7. Photoacoustic multipass cell according to one of the preceding claims, characterized that the installed acoustic resonator (8) or the photoacoustic cell (108) is designed as a cylinder.

8. Photoacoustic multipass cell according to claim 7, **characterized in that** the means (3, 103) for reflecting light are attached to the side walls of the cylinder such that the sound wave excitable by the absorption is the second azimuthal resonance of the cylinder oscillation.

9. Photoacoustic multipass cell according to claim 8, **characterized in that** two opposing spherical mirrors (103) with a common midpoint are present, and a divergent light source is arranged in the area of the common midpoint such that the excitation light can be guided to a first mirror (103) from which it can be reflected to the opposing second mirror (103) so that the light can be reflected multiple times between the opposing mirrors (103).

10. Photoacoustic multipass cell according to one of claims 8 or 9, **characterized in that** the excitation light can be provided with a modulated wavelength or modulated intensity, wherein especially the frequency of the resonance excited or to be excited can be set as the modulation frequency.

11. Photoacoustic multipass cell according to one of claims 8 or 9, **characterized in that** the excitation light can be provided as a single pulse or periodic sequence of pulses, wherein with a periodic sequence, the pulse repetition frequency corresponds to the resonant frequency of the resonance excited or to be excited.

12. Photoacoustic measuring system containing a photoacoustic multipass cell according to one of the preceding claims.

## Revendications

1. Cellule photoacoustique multipassage comportant une source lumineuse et des éléments (3) conçus pour concentrer pour la réflexion de lumière dans un résonateur acoustique (8), un gaz à analyser se trouvant dans le résonateur acoustique (8), **caractérisée en ce que** la source lumineuse est disposée entre les éléments (3) conçus pour concentrer de telle sorte que de la lumière provenant de la source lumineuse arrive sur les éléments concentrateurs et peut se réfléchir plusieurs fois dans la cellule multipassage.

2. Cellule photoacoustique multipassage selon la revendication 1, **caractérisée en ce que** la source lumineuse est une fibre (5) amenée dans la cellule photoacoustique multipassage, à l'extrémité de laquelle la lumière sortant de la fibre (5) peut arriver dans la cellule photoacoustique multipassage.

3. Cellule photoacoustique multipassage selon la revendication 1, **caractérisée en ce que** la source lumineuse est une diode laser, notamment une diode laser pourvue d'une lentille, disposée dans la cellule photoacoustique multipassage.

4. Cellule photoacoustique multipassage selon une des revendications précédentes, **caractérisée en ce qu'**on dispose de deux miroirs sphériques (3) d'axe optique commun, comme éléments pour la réflexion de la lumière.

5. Cellule photoacoustique multipassage selon la revendication 4, **caractérisée en ce que** les miroirs (3) ont le même rayon.

6. Cellule photoacoustique multipassage selon une des revendications 4 ou 5, **caractérisée en ce que** la source lumineuse se trouve plus proche du point central commun des miroirs (3) que d'un des miroirs.

7. Cellule photoacoustique multipassage selon une des revendications précédentes, **caractérisée en ce que** le résonateur acoustique (8) installé ou la cellule photoacoustique (108) est conçu en forme de cylindre.

8. Cellule photoacoustique multipassage selon la revendication 7, **caractérisée en ce que** les éléments (3, 103) pour la réflexion de lumière sur les parois latérales du cylindre sont disposés de telle sorte que l'onde sonore excitable par l'absorption est la deuxième résonance azimutale de l'oscillation du cylindre.

9. Cellule photoacoustique multipassage selon la revendication 8, **caractérisée en ce qu'**on dispose de deux miroirs sphériques (103) opposés de point central commun et d'une source lumineuse divergente dans la région du point central commun disposée de telle sorte que la lumière d'excitation peut être guidée vers un premier miroir (103) d'où elle peut être réfléchie vers le deuxième miroir (103) opposé de telle sorte que la lumière puisse être réfléchie plusieurs fois entre les miroirs (103) opposés.

10. Cellule photoacoustique multipassage selon une des revendications 8 ou 9, **caractérisée en ce que** la lumière d'excitation peut être fournie modulée en longueur d'ondes ou en intensité, la fréquence de modulation pouvant notamment être réglée à la fréquence de résonance à exciter ou excitée.

11. Cellule photoacoustique multipassage selon une des revendications 8 ou 9, **caractérisée en ce que** la lumière d'excitation peut être fournie sous la forme d'une impulsion unique ou d'une succession périodique d'impulsions, la fréquence de répétition des impulsions correspondant dans le cas de succession périodique à la fréquence de résonance de la résonance excitée ou à exciter.

12. Système de mesure photoacoustique contenant une cellule photoacoustique multipassage selon une des revendications précédentes.
